# EUROPÄISCHE PATENTSCHRIFT

(11) **EP 3 259 162 B1**
(45) Veröffentlichungstag und Bekanntmachung des Hinweises auf die Patenterteilung: **13.03.2019**
(21) Anmeldenummer: 16700437.3
(22) Anmeldetag: 13.01.2016
(51) Int. Cl.: B60T 13/57

(54) **UNTERDRUCKBREMSKRAFTVERSTÄRKER MIT DROSSELNDER STEUERVENTILANORDNUNG**
VACUUM BRAKE BOOSTER HAVING A THROTTLE CONTROL VALVE ASSEMBLY
SERVOFREIN À DÉPRESSION MUNI D'UN SYSTÈME DE SOUPAPE DE COMMANDE D'ÉTRANGLEMENT

(30) Priorität: 16.02.2015 DE 102015001981
(43) Veröffentlichungstag der Anmeldung: 27.12.2017
(73) Patentinhaber: Lucas Automotive GmbH, 56070 Koblenz (DE)
(72) Erfinder: CALVO MARTINEZ, José Manuel, 56642 Kruft (DE); WARKENTIN, Paul, 56567 Neuwied (DE); WINGENDER, Kurt, 56244 Hartenfels (DE); HOFMANN, Martin, 56743 Mendig (DE)
(74) Vertreter: Schmidt, Steffen J.
(86) Internationale Anmeldenummer: PCT/EP2016/050492
(87) Internationale Veröffentlichungsnummer: WO 2016/131563

(56) Entgegenhaltungen:
- EP-A1- 1 323 606
- EP-A1- 2 085 277
- WO-A1-00/18627
- WO-A1-2004/065191
- DE-A1- 3 935 811

## Beschreibung

Die vorliegende Erfindung betrifft einen Unterdruckbremskraftverstärker für eine Kraftfahrzeugbremsanlage, umfassend ein mit einem Bremspedal gekoppeltes oder koppelbares verlagerbares Krafteingangsglied, eine in einem Verstärkergehäuse angeordnete Kammeranordnung mit wenigstens einer Arbeitskammer und wenigstens einer Unterdruckkammer, die über wenigstens eine bewegliche Wand voneinander getrennt sind, eine durch das Krafteingangsglied betätigbare Steuerventilanordnung und ein Kraftausgangsglied zum Übertragen einer Betätigungskraft an ein nachgeordnetes Bremssystem, wobei die wenigstens eine Arbeitskammer über die Steuerventilanordnung wahlweise mit einer Unterdruckquelle oder der Atmosphäre fluidisch verbindbar ist, und wobei die Steuerventilanordnung mit der wenigstens einen beweglichen Wand zur gemeinsamen Bewegung gekoppelt ist, wobei die Steuerventilanordnung umfasst: ein Steuerventilgehäuse, in dem ein Betätigungskolben verlagerbar angeordnet ist, der mit dem Krafteingangsglied gekoppelt ist, einen ersten Ventilsitz und einen zweiten Ventilsitz, wobei die Steuerventilanordnung in eine Ausgangsstellung vorgespannt ist, in der zumindest der erste Ventilsitz geschlossen ist.

Derartige Unterdruckbremskraftverstärker sind hinlänglich aus dem Stand der Technik bekannt. Durch das wahlweise fluidische Verbinden der wenigstens einen Arbeitskammer mit einer Unterdruckquelle, beispielsweise dem Ansaugtrakt eines Verbrennungsmotors, oder der Umgebungsatmosphäre mittels der Steuerventilanordnung kann bedarfsweise eine Druckdifferenz an der wenigstens einen beweglichen Wand aufgebaut werden. Diese Druckdifferenz kann die von dem Fahrer auf das Bremspedal ausgeübte Bremskraft verstärken und somit der Bremsvorgang unterstützen. Insbesondere kann die fluidische Verbindung zwischen der wenigstens einen Arbeitskammer und der Umgebungsatmosphäre durch Öffnen eines Ventilsitzes hergestellt werden, der hier als erster Ventilsitz bezeichnet wird. Entsprechend ist die wenigstens eine Arbeitskammer über den als zweiten Ventilsitz bezeichneten Ventilsitz mit der Unterdruckquelle verbindbar bzw. von der Unterdruckquelle trennbar.

Es hat sich gezeigt, dass es beim Öffnen des ersten Ventilsitzes in dem sich bildenden Luftspalt häufig zu Instabilitäten in dem sich ausbildenden Luftstrom kommt. Diese Instabilitäten können sich als für den Fahrer wahrnehmbare Vibrationen am Bremspedal und/oder Geräusche im Fußraum des Fahrzeugs äußern. Die beschriebenen Instabilitäten können sich dabei nicht nur zu Beginn einer Bremsung ausbilden, sondern auch dann, wenn die Bremsung aus einer Haltephase heraus in ihrer Intensität gesteigert wird. Mit anderen Worten treten diese Instabilitäten immer dann auf, wenn die Steuerventilanordnung aus einer Gleichgewichtsstellung heraus, die hier allgemein als Ausgangsstellung bezeichnet wird und in der der erste Ventilsitz und der zweite Ventilsitz geschlossen sind, zum Öffnen des ersten Ventilsitzes verlagert wird.

Da die beschriebenen Instabilitäten vorwiegend bei hohen Strömungsgeschwindigkeiten im Bereich der Steuerventilanordnung vorkommen, wird im Stand der Technik versucht, die Zuführung von Luft aus dem Umgebungsatmosphärenbereich in dem betroffenen Abschnitt der Steuerventilanordnung oder des Bremskraftverstärkers zu drosseln.

Ein derartiger Unterdruckbremskraftverstärker ist beispielsweise aus dem Dokument WO 00/18627 A1 bekannt. Dieses beschreibt einen Unterdruckbremskraftverstärker mit einer Steuerventilanordnung, die einen flexiblen Luftfilter umfasst. Der Luftfilter ist in oder an einem verlagerbaren Betätigungskolben der Steuerventilanordnung angeordnet. Er bildet in Verbindung mit einem Leitblech und einem zugehörigen Ventilsitz einen veränderbaren Einströmquerschnitt für durch die Ventilanordnung strömende Umgebungsluft. Das Leitblech weist eine vorspringende Anschlagkante auf, die bei geschlossenem Ventilsitz um ein vorgegebenes Maß in den flexiblen Luftfilter hineindrückt. Wird der Ventilsitz durch Verlagerung des Betätigungskolbens geöffnet und damit der Luftfilter von dem Leitblech bzw. dessen Anschlagkante wegverlagert, verringert sich das Maß um das die Anschlagkante in den Luftfilter hineindrückt. Solange die Anschlagkante des Leitblechs und der Luftfilter zusammenwirken, d. h. solange die Anschlagkante noch nicht vollständig von dem Luftfilter abgehoben ist, wird die von außen einströmende Umgebungsluft von dem Leitblech durch den Filter hindurch geleitet und dabei gedrosselt. Aufgrund der Anordnung des Leitblechs, des Luftfilters und des Ventilsitzes wird die einströmende Luft dabei im Wesentlichen S-förmig durch den Luftfilter geführt.

Weiterer Stand der Technik ist aus dem Dokument EP 1 323 606 B1 bekannt. Dieses beschreibt einen Unterdruckbremskraftverstärker mit einer Steuerventilanordnung, die zu den bekannten Ventilsitzen ein elastisches Drosselventil umfasst. Das Drosselventil ist vorzugsweise aus einem gummielastischen Material hergestellt und weist eine radiale Öffnung auf. Das Drosselventil ist formschlüssig mit einem Ventilelement verbunden und gegenüber diesem in seiner Position relativ zu dem Ventilelement festgelegt. Das Drosselventil steht abschnittsweise mit einem verlagerbaren Betätigungskolben der Steuerventilanordnung in Anlage. Wird der Betätigungskolben in Betätigungsrichtung von dem Drosselventil wegverlagert, öffnet sich der erste Ventilsitz zum Verbinden einer Arbeitskammer mit der Umgebungsatmosphäre. Da das Drosselventil zum abschnittsweisen Anlegen an dem Betätigungskolben elastisch verformt ist, bleibt das Drosselventil beim Öffnen des zuvor genannten ersten Ventilsitzes zunächst in Anlage mit dem Betätigungskolben. Dabei strömt Umgebungsluft zunächst über die Öffnung des Drosselventils durch den geöffneten ersten Ventilsitz in die Arbeitskammer. Während dieses Vorgangs wird das Drosselventil gegenüber einem Gehäuse der Steuerventilanordnung und gegenüber dem Ventilelement nicht verlagert.

Die Lösungen aus dem Stand der Technik sehen die Verwendung von Komponenten vor, die aufgrund ihrer Materialeigenschaften anfällig für Verschmutzungen und/oder Verschleiß sind. Dies hat mit zunehmender Betriebsdauer negative Auswirkungen auf die Funktion des jeweiligen Bremskraftverstärkers. So kann beispielsweise ein Luftfilter aufgrund von Verunreinigungen in der Umgebungsluft zumindest teilweise verschlossen werden und den durchströmenden Luftstrom zu stark drosseln. Auch kann das eingesetzte Material des Luftfilters mit zunehmender Betriebsdauer porös werden. Beides führt dazu, dass die vorgesehene Funktion der Steuerventilanordnung nicht mehr hinreichend gewährleistet werden kann. Ähnliches gilt für ein gummielastisches Drosselventil, dessen elastische Materialeigenschaften sich im Laufe der Zeit verschlechtern. Dadurch kann es zu einem Verlust der elastischen Vorspannung des Drosselventils gegenüber dem Betätigungskolben kommen, was sich ebenfalls negativ auf die Funktion der Steuerventilanordnung bzw. auf das Drosselverhalten auswirkt.

Es ist daher eine Aufgabe der vorliegenden Erfindung, einen Unterdruckbremskraftverstärker der eingangs genannten Art bereitzustellen, der die genannten Instabilitäten vermindert und bei dem die eingesetzte Anzahl verschleißanfälliger Komponenten reduziert wird.

Diese Aufgabe wird mit einem Unterdruckbremskraftverstärker mit den Merkmalen des Anspruchs 1 gelöst.

Bevorzugte Ausführungsformen werden aus den Unteransprüchen 2 bis 13 ersichtlich.

Wie eingangs erwähnt, ist die wenigstens eine Arbeitskammer erfindungsgemäß über den ersten Ventilsitz mit der Umgebungsatmosphäre verbindbar bzw. von der Umgebungsatmosphäre trennbar. Die wenigstens eine Arbeitskammer ist ferner über den zweiten Ventilsitz mit der Unterdruckquelle verbindbar bzw. von der Unterdruckquelle trennbar. Befindet sich die Steuerventilanordnung in der Ausgangsstellung, in der beide Ventilsitze geschlossen sind, kann der erste Ventilsitz durch Betätigen des Krafteingangsglieds und durch eine daraus folgende Verlagerung des Betätigungskolbens in Betätigungsrichtung geöffnet werden. Die Betätigungsrichtung kann dabei einer Kraftausgangsrichtung des Bremskraftverstärkers entsprechen. Durch das Öffnen des ersten Ventilsitzes kommt es zu einer fluidischen Verbindung zwischen der Umgebungsatmosphäre und der wenigstens einen Arbeitskammer. Demzufolge baut sich in der wenigstens einen Arbeitskammer ein gegenüber der wenigstens einen Unterdruckkammer höherer Druck auf, der auf die wenigstens eine bewegliche Wand wirkt. Die wenigstens eine bewegliche Wand und das damit gekoppelte im Wesentlichen zylindrische Steuerventilgehäuse werden in Folge der anliegenden Druckdifferenz verlagert, bis sich ein Gleichgewichtszustand, d. h. die Ausgangsstellung, in vorgerückter Stellung des Steuerventilgehäuses ausbildet. In dieser Gleichgewichtsstellung bzw. Ausgangsstellung sind beide Ventilsitze erneut geschlossen. Wird das Krafteingangsglied ausgehend von der Gleichgewichtsstellung/Ausgangsstellung durch Reduzieren einer Pedalbetätigungskraft freigegeben, und damit der Betätigungskolben unter Wirkung einer Rückstellfeder entgegen der Betätigungsrichtung verlagert, öffnet sich der zweite Ventilsitz zwischen der wenigstens einen Arbeitskammer und der Unterdruckquelle, wodurch ein Druckausgleich an der beweglichen Wand erfolgt.

Hierbei ist anzumerken, dass die Ausgangsstellung, wie erläutert, eine Gleichgewichtsstellung beschreibt, die nicht notwendigerweise und ausschließlich mit einem unbetätigten Zustand des Bremskraftverstärkers gleichzusetzen ist. In einem vollständig unbetätigten Zustand des Bremskraftverstärkers kann beispielsweise auch vorgesehen sein, dass lediglich der erste Ventilsitz geschlossen ist, während der zweite Ventilsitz leicht geöffnet ist.

Zur Lösung der Aufgabe steht die Drosselhülse in der Ausgangsstellung unter Vorspannung zumindest abschnittsweise mit dem Betätigungskolben in Anlage, wobei die Drosselhülse wenigstens ein Drosselfenster aufweist und wobei die Drosselhülse aus der Ausgangsstellung heraus bei einer Betätigung des Krafteingangsglieds relativ zu dem Steuerventilgehäuse um einen vorbestimmten Funktionsweg verlagerbar ist. Während dieser Verlagerung steht die Drosselhülse mit dem Betätigungskolben in Anlage, so dass eine fluidische Verbindung zwischen der wenigstens einen Arbeitskammer und der Umgebungsatmosphäre über das wenigstens eine Drosselfenster besteht. Bei Überschreiten des Funktionswegs hebt die Drosselhülse von dem Betätigungskolben ab.

Durch die Vorspannung der Drosselhülse kann diese bei der Verlagerung des Betätigungskolbens im Wesentlichen synchron zu dem Betätigungskolben verlagert werden. Mit anderen Worten kann die Drosselhülse der Verlagerung des Betätigungskolbens um den Funktionsweg folgen. Überschreitet die Verlagerung des Betätigungskolbens relativ zu dem Steuerventilgehäuse den vorbestimmten Funktionsweg, wird die Drosselhülse nicht weiter mitverlagert, sodass sich die Drosselhülse gegenüber dem Betätigungskolben von diesem abhebt. Das Überschreiten des Funktionswegs ist somit auf die Verlagerung des Betätigungskolbens durch Betätigen des Krafteingangsglieds sowie die damit verbundene Verlagerung der Drosselhülse in Betätigungsrichtung zu beziehen.

Zu einer solchen Überschreitung des Funktionswegs kann es beispielsweise dann kommen, wenn eine schnell hohe Bremskraft auf das Bremspedal und damit auf das Krafteingangsglied aufgebracht wird. In diesem Fall wird durch das Abheben der Drosselhülse von dem Betätigungskolben ein im Wesentlichen ungehindertes Einströmen der Umgebungsluft durch den sich bildenden Spalt in die wenigstens eine Arbeitskammer ermöglicht. Dadurch kann sichergestellt werden, dass bei Aufbringung einer starken Bremskraft, beispielsweise in Notfallbremsungen, die notwendige Druckaufbaugeschwindigkeit erreicht werden kann.

Solange die Verlagerung des Betätigungskolbens durch Betätigen des Krafteingangsglieds relativ zu dem Steuerventilgehäuse den vorbestimmten Funktionsweg der Drosselhülse jedoch nicht überschreitet, steht die Drosselhülse weiterhin zumindest abschnittsweise in Anlage mit dem Betätigungskolben. Die einströmende Umgebungsluft wird somit gedrosselt, da diese ausschließlich über das wenigstens eine Drosselfenster in die wenigstens eine Arbeitskammer gelangen kann.

Somit wird mithilfe der beschriebenen Steuerventilanordnung der vorliegenden Erfindung, bei einem Verlagern der Steuerventilanordnung aus der Ausgangsstellung heraus, eine Drosselung der einströmenden Umgebungsluft in die wenigstens eine Arbeitskammer realisiert. Da die zur Drosselung vorgesehene erfindungsgemäße Drosselhülse verlagerbar ausgebildet ist, kann auf den Einsatz von Drosselkomponenten aus gummielastischen, verformbaren Materialien im Wesentlichen verzichtet werden. Dadurch wird eine verschleißbeständige und gleichzeitig robuste Steuerventilanordnung bereitgestellt.

Gemäß der Erfindung kann die Anlage zwischen der Drosselhülse und dem Betätigungskolben insbesondere zwischen einer der Drosselhülse zugewandten Fläche des Betätigungskolbens und einer Stirnfläche der Drosselhülse vorgesehen sein. Der in Anlage stehende Flächenabschnitt des Betätigungskolbens und die Stirnfläche der Drosselhülse können dabei jeweils planar ausgebildet sein. Alternativ dazu kann eine der beiden Flächen auch einen ringförmigen Dichtwulst oder Ähnliches aufweisen.

Gemäß einer Weiterbildung der Erfindung kann die Drosselhülse aus der Ausgangsstellung heraus, bei einer Betätigung des Krafteingangsglieds relativ zu einem Ventilelement, um den vorbestimmten Funktionsweg verlagerbar sein. Dabei kann das Ventilelement in der Ausgangsstellung zumindest in Betätigungsrichtung mit dem Steuerventilgehäuse in positionierender Anlage stehen. Somit kann sich die Drosselhülse bei der Betätigung des Krafteingangsglieds aus der Ausgangsstellung heraus relativ zu dem Ventilelement und damit gleichzeitig relativ zu dem Steuerventilgehäuse verlagern.

Ferner kann die Drosselhülse wenigstens einen Anschlagkragen aufweisen, der mit einer Anschlagfläche des Ventilelements oder einer anderen Komponente der Steuerventilanordnung zumindest abschnittsweise in Anlage bringbar ist. Der Anschlagkragen kann einstückig mit der Drosselhülse ausgebildet sein. Alternativ dazu kann der Anschlagkragen auch in Form einer zusätzlichen Komponente, beispielsweise formschlüssig, mit der Drosselhülse verbunden sein.

Gemäß einer Weiterbildung der Erfindung kann der Anschlagkragen der Drosselhülse in der Ausgangsstellung von der Anschlagfläche des Ventilelements oder der anderen Komponente der Steuerventilanordnung um den Funktionsweg beabstandet sein. Dadurch kann der Funktionsweg in Betätigungsrichtung, also in Richtung der Verlagerung der Drosselhülse bei Betätigen des Krafteingangsglieds, durch ein Zusammenwirken des Anschlagkragens mit der Anschlagfläche begrenzt sein. Genauer gesagt kann die Bewegung der Drosselhülse, die aufgrund der Vorspannung in Betätigungsrichtung der Verlagerung des Betätigungskolbens durch das Krafteingangsglied folgt, durch das Zusammenwirken des Anschlagkragens mit der Anschlagfläche begrenzt werden. Dies kann bei dem zuvor beschriebenen Überschreiten des Funktionswegs beim Verlagern des Betätigungskolbens zum Abheben der Drosselhülse von dem Betätigungskolben führen, sobald der Anschlagkragen mit der Anschlagfläche in Berührung kommt.

Gemäß einer weiteren Ausführungsform der Erfindung kann eine Stirnfläche des Ventilelements in der Ausgangsstellung eine dichtende Anlagefläche des ersten Ventilsitzes und des zweiten Ventilsitzes ausbilden. Dabei kann die Stirnfläche entgegengesetzt zu der Anschlagfläche des Ventilelements ausgebildet sein. Die Stirnfläche des Ventilelements kann zumindest abschnittsweise, d. h. im Bereich des ersten und/oder zweiten Ventilsitzes in Form einer planaren Fläche oder in Form eines Dichtwulstes ausgebildet sein.

Gemäß einer Weiterbildung der Erfindung kann das wenigstens eine Drosselfenster in einem an den Betätigungskolben angrenzenden Bereich der Drosselhülse angeordnet sein. Alternativ dazu kann das Drosselfenster auch radial in der Drosselhülse in einem Abstand zu der Stirnfläche der Drosselhülse angeordnet sein. Dabei kann zwischen der mit dem Betätigungskolben in Anlage bringbaren Stirnfläche der Drosselhülse und dem wenigstens einen Drosselfenster ein ringförmig geschlossener Drosselhülsenabschnitt ausgebildet sein, der kein Drosselfenster aufweist. Ferner kann eine Vielzahl an Drosselfenstern entlang des Umfangs der Drosselhülse ausgebildet sein, wobei die Drosselfenster jeweils voneinander beabstandet sein können. Auch kann eine Vielzahl an Drosselfenstern voneinander beabstandet in Längsrichtung der Drosselhülse angeordnet sein. Bei der Anordnung und Ausbildung des wenigstens einen Drosselfensters und/oder der Vielzahl an Drosselfenstern ist jeweils darauf zu achten, dass diese derart angeordnet sind, dass bei Anlage der Drosselhülse an dem Betätigungskolben eine fluidische Verbindung zwischen der Umgebungsatmosphäre und der wenigstens einen Arbeitskammer beim Öffnen des ersten Ventilsitzes über das/die Drosselfenster herstellbar ist.

Gemäß einer Weiterbildung der Erfindung kann die Drosselhülse eine im Wesentlichen zylindrische Form mit einem ersten Durchmesser und einem zweiten Durchmesser aufweisen, wobei der zweite Durchmesser größer ist als der erste Durchmesser. Der zuvor beschriebene Anschlagkragen kann dabei durch eine Verbindungsfläche ausgebildet sein, die den Drosselhülsenabschnitt des ersten Durchmessers mit dem Drosselhülsenabschnitt des zweiten Durchmessers verbindet. Der Drosselhülsenabschnitt des ersten Durchmessers kann dabei einen dem Betätigungskolben zugewandten Abschnitt der Drosselhülse ausbilden. Das wenigstens eine Drosselfenster kann erfindungsgemäß in dem Drosselhülsenabschnitt des ersten Durchmessers ausgebildet sein. Ferner kann die Länge des Drosselhülsenabschnitts des ersten Durchmessers, die sich von der mit dem Betätigungskolben in Anlage bringbaren Stirnfläche bis zu dem Anschlagkragen bzw. der Verbindungsfläche erstreckt, in Abhängigkeit von den weiteren Komponenten der Steuerventilanordnung, insbesondere des Betätigungskolbens und des Ventilelements, gewählt sein. Es kann somit durch die Wahl der Länge und weiteren Ausbildung der Drosselhülse der Funktionsweg vorbestimmt werden.

Gemäß einer weiteren Ausführungsform der Erfindung kann die Steuerventilanordnung einen Haltering umfassen, der eine auf die Drosselhülse wirkende Rückstellfeder abstützt. Dabei kann der Haltering ferner durch eine weitere Rückstellfeder vorgespannt sein. Die auf die Drosselhülse wirkende Rückstellfeder kann sich an der Innenseite des Anschlagkragens der Drosselhülse abstützen, d. h. an der Innenseite der Verbindungsfläche der Drosselhülse zwischen dem Drosselhülsenabschnitt des ersten Durchmessers und dem Drosselhülsenabschnitt des zweiten Durchmessers.

Die auf den Haltering wirkende weitere Rückstellfeder kann an einer von der Drosselhülse abgewandten Seite des Halterings mit einem ersten Ende angreifen und sich mit einem zweiten Ende an einer mit dem Krafteingangsglied verbundenen Abstützvorrichtung abstützen. Demnach kann durch Betätigen des Bremspedals, d.h. durch Verlagern des Krafteingangsglieds in Betätigungsrichtung, über die weitere Rückstellfeder die Vorspannung auf den Haltering erhöht werden. Dabei kann die weitere Rückstellfeder gegenüber der auf die Drosselhülse wirkende Rückstellfeder steifer ausgelegt sein. Der Haltering kann somit als Abstützbasis für die auf die Drosselhülse wirkende Rückstellfeder in Position gehalten werden. Des Weiteren kann die weitere Rückstellfeder durch Zusammenwirken mit der Abstützvorrichtung des Krafteingangsglieds derart auf das Krafteingangsglied einwirken, dass dieses bei Reduzierung des Bremspedaldrucks entgegen der Betätigungsrichtung zurückverlagert wird. Zudem kann die weitere Rückstellfeder dazu dienen, die Steuerventilanordnung in einer unbetätigten Ruhestellung in die Ausgangsstellung vorzuspannen.

Der Haltering kann ausgehend von der Ausgangsstellung in Betätigungsrichtung festgelegt sein. Dadurch kann der Haltering bei Betätigen der Steuerventilanordnung aus der Ausgangsstellung heraus gegenüber der Drosselhülsenrückstellfeder eine im Wesentlichen feste Position einnehmen. Die Drosselhülsenrückstellfeder kann so in einer Weise abgestützt werden, dass sie die Drosselhülse für eine Verlagerung synchron zu der Bewegung des Betätigungskolbens um den Funktionsweg vorspannt. Mit anderen Worten kann durch die auf die Drosselhülse wirkende Rückstellfeder sichergestellt werden, dass die Drosselhülse während der Verlagerung des Betätigungskolbens mit diesem in Anlage steht. Dies gilt, solange der Anschlagkragen nicht mit der Anschlagfläche des Ventilelements in Berührung steht, d. h. solange der Funktionsweg nicht überschritten wird.

Gemäß einer Weiterbildung der Erfindung kann der erste Ventilsitz in Form eines ringförmigen inneren Dichtsitzes an dem Betätigungskolben ausgebildet sein und/oder der zweite Ventilsitz in Form eines ringförmigen äußeren Dichtsitzes an dem Steuerventilgehäuse ausgebildet sein. Durch eine solche Anordnung kann der erste Ventilsitz bei Verlagerung des Betätigungskolbens in Kraftausgangrichtung geöffnet werden, ohne dabei den zweiten Ventilsitz zu öffnen. Ferner kann bei dieser Anordnung der zweite Ventilsitz bei einer Verlagerung entgegen der Betätigungsrichtung geöffnet werden, während der erste Ventilsitz geschlossen ist.

Ferner kann zwischen dem ersten Ventilsitz und dem zweiten Ventilsitz wenigstens ein Verbindungskanal zu der wenigstens einen Arbeitskammer ausgebildet sein. Über diesen Verbindungskanal kann beim Öffnen des ersten Ventilsitzes Umgebungsluft aus der Umgebungsatmosphäre in die wenigstens eine Arbeitskammer einströmen, wodurch in bekannter Weise eine Druckdifferenz an der wenigstens einen beweglichen Wand aufgebaut werden kann.

In einer weiteren Ausführungsform der Erfindung kann die Steuerventilanordnung ein Halteelement umfassen, das zumindest abschnittsweise mit dem Steuerventilgehäuse in Anlage steht und gleichzeitig die Drosselhülse in Bezug auf eine Längsachse zentriert. Das Halteelement kann einen kreisförmigen Außenumfang sowie einen kreisförmigen Innenumfang aufweisen. Ferner kann sich das Halteelement zumindest mit einem Abschnitt der Außenumfangsfläche dichtend an die Innenumfangsfläche des Steuerventilgehäuses anlegen. Ferner kann das Halteelement einen Flächenabschnitt an der Innenumfangsfläche aufweisen, der in dichtender Anlage mit einem Abschnitt der Außenumfangsfläche der Drosselhülse steht. Das Halteelement kann eine Verbindung zwischen der Drosselhülse und dem Steuerventilgehäuse darstellen und somit die Drosselhülse in Bezug auf die Längsachse zentrieren.

Durch eine dichtende Anlage zwischen dem Halteelement und dem Steuerventilgehäuse sowie zwischen dem Halteelement und der Drosselhülse kann sichergestellt werden, dass Umgebungsluft lediglich auf der Innenseite der Drosselhülse von der Umgebungsatmosphäre in die wenigstens eine Arbeitskammer einströmen kann. Erfindungsgemäß kann die dichtende Anlage zwischen dem Halteelement und der Drosselhülse derart ausgeführt sein, dass die Drosselhülse leichtgängig gegenüber dem Steuerventilgehäuse und dem Halteelement verlagerbar ist.

Das Halteelement kann ferner auf einer von dem Betätigungskolben abgewandten Seite zumindest abschnittsweise mit dem Haltering und/oder der zuvor beschriebenen weiteren Rückstellfeder in Anlage stehen. Somit kann eine von der weiteren Rückstellfeder aufgebrachte Vorspannung indirekt über den Haltering und/oder unmittelbar auf das Halteelement übertragen werden.

Gemäß einer weiteren Ausführungsform der Erfindung kann das Halteelement einen Abschnitt des Ventilelements fixieren und/oder eine Ventilelementrückstellfeder abstützen, die das Ventilelement in Richtung der Ventilsitze vorspannt. Die Ventilelementrückstellfeder kann dabei zumindest abschnittsweise in einer an dem Halteelement vorgesehenen Ausnehmung aufgenommen sein. Ferner kann das Halteelement über zwei Flächen mit dem Abschnitt des Ventilelements in Anlage stehen. Somit kann das Ventilelement durch das Halteelement in zwei Richtungen fixiert werden, wobei das Halteelement das Ventilelement beispielsweise in Betätigungsrichtung fixieren und in Bezug auf die Längsachse zentrieren kann. Dabei kann der Abschnitt des Ventilelements zwischen dem Halteelement und dem Steuerventilgehäuse angeordnet sein. Somit kann das Ventilelement, wenn es zumindest mit dem zweiten Ventilsitz in Anlage steht, durch den zweiten Ventilsitz, die zwei anliegenden Flächen des Halteelements und die Innenumfangsfläche des Steuerventilgehäuses in seiner Position vollständig festgelegt sein. Ferner kann ein mit der Ventilelementrückstellfeder zusammenwirkender Abschnitt des Ventilelements in Bezug auf eine Längsachse radial und/oder axial derart von dem mit dem Halteelement in Anlage stehenden Abschnitt des Ventilelements beabstandet sein, das eine optimale Kraftverteilung auf das Ventilelement wirkt, wobei das Ventilelement in Richtung des ersten und zweiten Ventilsitzes gedrückt wird. Ferner kann das Halteelement die Anschlagfläche für die Drosselhülse ausbilden.

Gemäß einer weiteren Ausführungsform der Erfindung kann der Unterdruckbremskraftverstärker eine erste und eine zweite Arbeitskammer, eine erste und eine zweite Unterdruckkammer und eine erste und zweite bewegliche Wand umfassen. Die erste und die zweite Arbeitskammer können über wenigstens einen Verbindungskanal miteinander verbunden sein. Eine solche Ausgestaltung des Unterdruckbremskraftverstärkers wird häufig als Tandem-Unterdruckbremskraftverstärker bezeichnet.

Grundsätzlich lässt sich der Unterdruckbremskraftverstärker für herkömmliche Bremsanlagen aber auch für Bremsanlagen verwenden, die für eine regenerative Bremsung, beispielsweise bei Hybridfahrzeugen einsetzbar sind. Letztere zeichnen sich dadurch aus, dass in einer Anfangsphase der Bremsung der Unterdruckbremskraftverstärker zunächst passiv bleibt und die Fahrzeugverzögerung im Wesentlichen über die Generatorwirkung eines Elektromotors erzielt wird. Die Wirkung des Bremskraftverstärkers setzt dann erst zeitlich verzögert ein. Bei einer solchen Ausführungsform ist zu Beginn der Bremsung, d.h. in der Ausgangsstellung des Bremskraftverstärkers, der zweite Ventilsitz zunächst geöffnet, sodass die wenigstens eine Arbeitskammer mit der wenigstens einen Unterdruckkammer verbunden ist und kein Druckaufbau an der beweglichen Wand erfolgen kann. Der zweite Ventilsitz schließt sich bei der Bremsung erst zeitverzögert, woraufhin die Wirkung des Unterdruckbremskraftverstärkers einsetzt. Eine hierzu alternative Ausführungsform der Erfindung sieht vor, dass bereits in der Ausgangsstellung der Steuerventilanordnung sowohl der erste Ventilsitz als auch der zweite Ventilsitz jeweils geschlossen sind. Diese Ausführungsform kann bei herkömmlichen Kraftfahrzeugen Anwendung finden, die keine regenerative Bremsfunktion bereitstellen. Der Bremskraftverstärker spricht bei dieser Ausführungsvariante infolge einer Bremspedalbetätigung sofort an, weil Arbeitskammer und Unterdruckkammer durch den geschlossenen zweiten Ventilsitz bereits zu Beginn der Bremsung voneinander getrennt sind und so unmittelbar in Reaktion auf eine Bremspedalbetätigung eine Druckdifferenz an der beweglichen Wand zwischen Arbeitskammer und Unterdruckkammer aufgebaut werden kann.

Es versteht sich, dass der Gegenstand der Erfindung nicht auf die zuvor beschriebenen Ausführungsformen beschränkt ist. Die beschriebenen Ausführungsformen und Merkmale können vom Fachmann beliebig kombiniert werden, ohne dabei vom Gegenstand der Erfindung abzuweichen.
Bevorzugte Ausführungsformen der Erfindung werden nun anhand der beigefügten, schematischen Zeichnungen näher erläutert, in denen
- Figur 1: eine achsenthaltende Teilschnittdarstellung eines Unterdruckbremskraftverstärkers gemäß der Erfindung zeigt,
- Figur 2: eine Detailschnittdarstellung der Steuerventilanordnung des erfindungsgemäßen Unterdruckbremskraftverstärkers zeigt und
- Figur 3: eine Detailschnittdarstellung gemäß Figur 2 einer zweiten Ausführungsform der Steuerventilanordnung des erfindungsgemäßen Unterdruckbremskraftverstärkers zeigt.

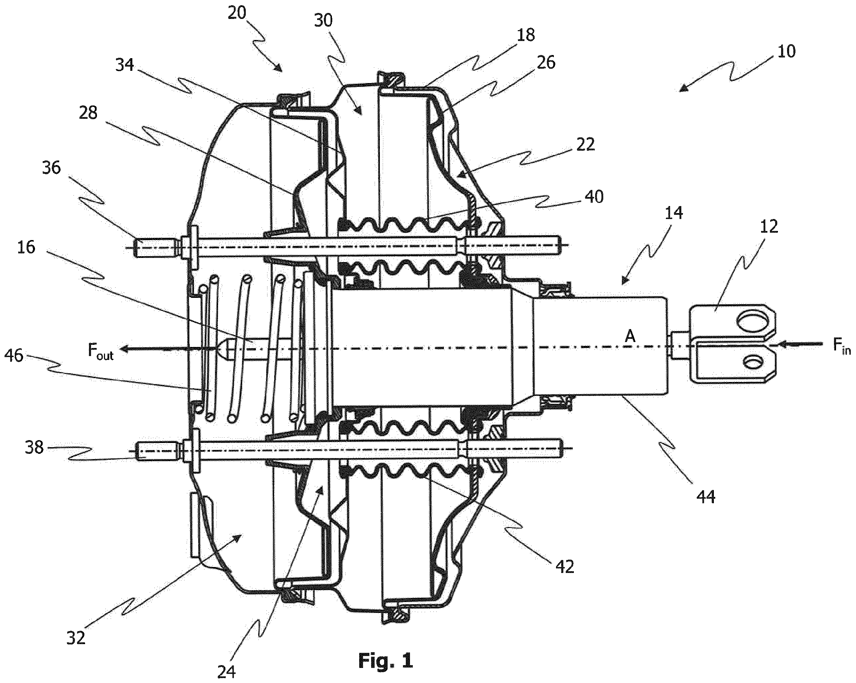

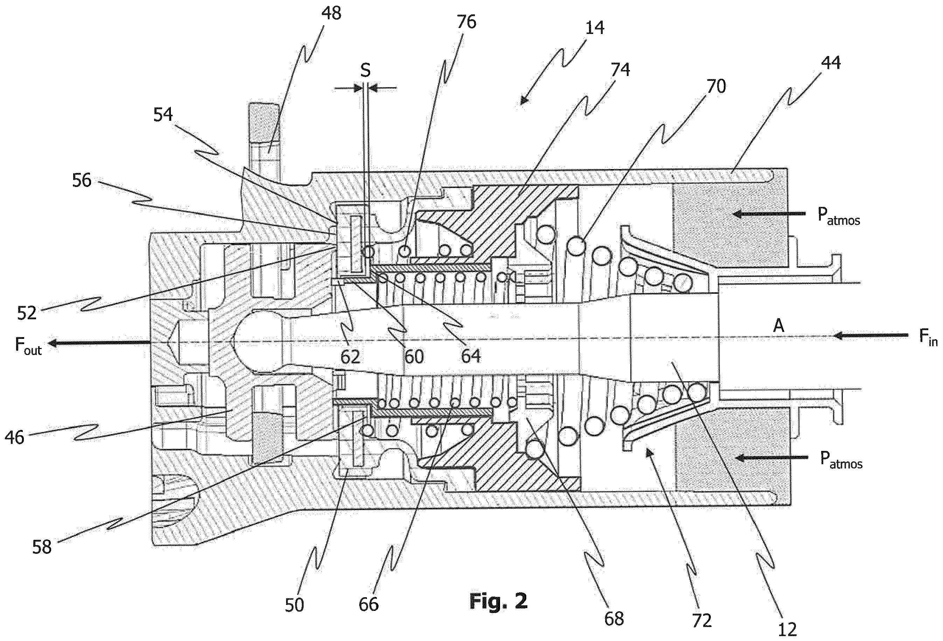

In Fig. 1 ist ein erfindungsgemäßer Unterdruckbremskraftverstärker einer ersten Ausführungsform in achsenthaltender Schnittansicht gezeigt und allgemein mit 10 bezeichnet. Der Unterdruckbremskraftverstärker 10 umfasst ein Krafteingangsglied 12, das beispielsweise mit einem nicht gezeigten Bremspedal koppelbar ist. Das Krafteingangsglied 12 erstreckt sich mit seinem in Fig. 1 linken Ende, welches nicht mit dem Bremspedal koppelbar ist, in eine Steuerventilanordnung 14 hinein, die im Detail mit Bezug auf Fig. 2 beschrieben wird. Die Steuerventilanordnung 14 ist mit einem Kraftausgangsglied 16 verbunden, das mit einem nicht gezeigten Hauptbremszylinder koppelbar ist. Der Unterdruckbremskraftverstärker 10 umfasst ferner ein gegenüber der Umgebungsatmosphäre abgedichtetes Verstärkergehäuse 18, in dem die Steuerventilanordnung 14 zumindest abschnittsweise aufgenommen und in diesem entlang einer Längsachse A verlagerbar ist.

Über das Krafteingangsglied 12 kann eine Betätigungskraft über das nicht gezeigte Bremspedal in Krafteingangsrichtung Fᵢₙ in den Bremskraftverstärker 10 eingebracht werden. Diese eingebrachte Betätigungskraft wird durch den Bremskraftverstärker 10 verstärkt und in Kraftausgangsrichtung Fₒᵤₜ an den nachgelagerten Hauptbremszylinder weitergeleitet. In der gezeigten Ausführungsform entspricht die Kraftausgangsrichtung Fₒᵤₜ der zuvor beschriebenen Betätigungsrichtung.

In dem Verstärkergehäuse 18 ist eine Kammeranordnung 20 vorgesehen. In der gezeigten Ausführungsform der Erfindung handelt es sich um eine Tandem-Kammeranordnung, wobei im Sinne der Erfindung auch die Ausgestaltung einer alternativen Kammeranordnung möglich ist. Die gezeigte Tandem-Kammeranordnung umfasst eine erste Arbeitskammer 22 und eine zweite Arbeitskammer 24, die jeweils durch eine bewegliche Wand 26, 28 von einer Unterdruckkammer 30, 32 getrennt ist. Somit umfasst die gezeigte Kammeranordnung 20 ein erstes Paar aus Arbeitskammer 22 und Unterdruckkammer 30 sowie ein zweites Paar aus Arbeitskammer 24 und Unterdruckkammer 32. Die beiden Kammerpaare sind durch eine im Gehäuse 18 angeordnete feststehende Wand 34 voneinander getrennt. Das Verstärkergehäuse 18 und die darin vorgesehene Kammeranordnung 20 werden in der gezeigten Darstellung von zwei Befestigungsbolzen 36, 38 durchsetzt, mittels derer der Unterdruckbremskraftverstärker 10 mit einem Fahrzeugchassis verbindbar ist. Dabei durchsetzen die Befestigungsbolzen 36 und 38 jeweils einen Verbindungskanal 40, 42, wobei die Verbindungskanäle wiederum jeweils die erste Arbeitskammer 22 mit der zweiten Arbeitskammer 24 fluidisch verbinden.

Die beweglichen Wände 26, 28 sind jeweils fest mit der Steuerventilanordnung 14, genauer gesagt mit einem Gehäuse der Steuerventilanordnung 44, zur gemeinsamen Bewegung verbunden. Das Steuerventilgehäuse 44 ist im Wesentlichen zylindrisch ausgebildet. Die Unterdruckkammern 30 und 32 sind im Betrieb des Fahrzeugs dauerhaft mit einer nicht gezeigten Unterdruckquelle, beispielsweise dem Ansaugtrakt des Fahrzeugs, verbunden. Die Arbeitskammern 22 und 24 sind in Abhängigkeit von der Betätigung der Steuerventilanordnung 14 wahlweise mit der Unterdruckquelle oder der Umgebungsatmosphäre verbindbar. Dadurch kann an den beweglichen Wänden 26, 28 ein Differenzdruck zwischen der jeweiligen Arbeitskammer 22, 24 und der zugehörigen Unterdruckkammer 30, 32 aufgebaut werden, um eine über das Bremspedal und das Krafteingangsglied 12 aufgebrachte Bremskraft zu verstärken.

Die Steuerventilanordnung 14 ist über eine Gehäuserückstellfeder 46 in die in Fig. 2 gezeigte Ausgangsstellung vorgespannt. In der gezeigten Ausführungsform entspricht die Ausgangsstellung gleichzeitig der unbetätigten Ruhestellung des Bremskraftverstärkers. Die Gehäuserückstellfeder 46 stützt sich an einem Ende gegenüber dem Steuerventilgehäuse 44 und mit dem anderen Ende an einer Abstützbasis des Verstärkergehäuses 18 ab. Hierbei ist anzumerken, dass die Gehäuserückstellfeder 46 die Steuerventilanordnung 14 auch in eine andere als in Fig. 2 gezeigte Stellung vorspannen kann. So kann sich beispielsweise eine unbetätigte Ruhestellung der Steuerventilanordnung 14 in einer alternativen Ausführungsform von der in Fig. 2 gezeigten Ausgangsstellung unterscheiden, ohne von der Erfindung abzuweichen. Die in Fig. 2 gezeigte Ausgangsstellung dient jedoch im nachfolgenden als Referenzstellung.

Vollständigkeitshalber ist anzumerken, dass das Steuerventilgehäuse 44 jeweils dichtend mit den beweglichen Wänden 26, 28 verbunden ist und dichtend gegenüber dem Verstärkergehäuse 18 und der feststehenden Wand 34 geführt ist.

Fig. 2 zeigt eine Steuerventilanordnung 14 gemäß einer Ausführungsform der Erfindung in Detaildarstellung. Es ist gezeigt, dass das Krafteingangsglied 12 entlang der Längsachse A in das Steuerventilgehäuse 44 hineinragt. Ein sphärisches Ende des Krafteingangsglieds ist in eine entsprechende Aufnahme eines Betätigungskolbens 46 aufgenommen. Der Betätigungskolben 46 ist in einem Abschnitt des Steuerventilgehäuses 44 verlagerbar aufgenommen, der einen geringeren Durchmesser als der Rest des Steuerventilgehäuses 44 aufweist.

Der Betätigungskolben 46 umfasst ferner eine ringförmige Aussparung, in die ein Anschlagelement 48 zumindest abschnittsweise eingreift, um die Verlagerung des Betätigungskolbens 46 und damit auch des Krafteingangsglieds 12 gegenüber dem Steuerventilgehäuse 44 zu begrenzen. Der Betätigungskolben 46 weist in Kraftausgangsrichtung Fₒᵤₜ einen zylindrischen Fortsatz zur Kraftweiterleitung an das Kraftausgangsglied 16 auf. An der davon entgegengesetzten Fläche des Betätigungskolbens 46, also der von der Kraftausgangsrichtung Fₒᵤₜ abgewandten Oberfläche des Betätigungskolbens 46, ist ein ringförmiger Dichtwulst ausgebildet. Dieser bildet mit einem daran in Anlage stehenden Ventilelement 50 einen ersten Ventilsitz 52 aus. Durch Öffnen und Schließen dieses ersten Ventilsitzes 52 sind die Arbeitskammern 22, 24 mit der Umgebungsatmosphäre verbindbar. Das Steuerventilgehäuse 44 ist zu der in Fig. 2 rechten Seite zur Umgebungsatmosphäre hin offen, was durch die Pfeile Pₐₜₘₒₛ gekennzeichnet ist. Um die Umgebungsatmosphäre durch Öffnen des ersten Ventilsitzes 52 mit den Arbeitskammern 22, 24 zu verbinden, ist ein entsprechender Verbindungskanal in Bezug auf die Längsachse A radial außerhalb des ersten Ventilsitzes 52 vorgesehen.

Ein zweiter Ventilsitz 54 ist in Bezug auf die Längsachse A radial außerhalb des ersten Ventilsitzes 52 zwischen dem Steuerventilgehäuse 44 und dem Ventilelement 50 ausgebildet. Genauer gesagt ist an einem Abschnitt des Steuerventilgehäuses 44 ein ringförmiger Dichtwulst ausgebildet, der mit dem Ventilelement 50 zusammenwirkt. Der ringförmige Dichtwulst ist dabei an einem Abschnitt des Steuerventilgehäuses 44 angeordnet, der sich in Bezug auf die Längsachse A im Wesentlichen senkrecht erstreckt und einen Steuerventilgehäuseabschnitt größeren Durchmessers mit einem Steuerventilgehäuseabschnitt kleineren Durchmessers verbindet, wobei in dem Abschnitt kleineren Durchmessers der Betätigungskolben 46 aufgenommen ist. Der ringförmige Dichtwulst des Betätigungskolbens 46 sowie der ringförmige Dichtwulst des Steuerventilgehäuses 44 stehen in der in Fig.2 gezeigten Ausgangsstellung mit einer Stirnseite 56 des Ventilelements 50 in Anlage. Somit sind in der gezeigten Ausgangsstellung der Steuerventilanordnung 14 die erste Arbeitskammer 22 und die zweite Arbeitskammer 24 von den zugehörigen Unterdruckkammern 30, 32 sowie von der Umgebungsatmosphäre getrennt. Sowohl der erste Ventilsitz 52 als auch der zweite Ventilsitz 54 sind in der Ausgangsstellung geschlossen. Die Stirnfläche 56 des Ventilelements ist entgegengesetzt zu einer Anschlagfläche 58 des Ventilelements 50 ausgebildet.

Die Steuerventilanordnung 14 umfasst des Weiteren eine Drosselhülse 60, durch die das Krafteingangsglied 12 hindurchgeführt ist. Die Drosselhülse 60 steht in der Ausgangsstellung mit einer in Kraftausgangsrichtung Fₒᵤₜ zeigenden Stirnfläche mit dem Betätigungskolben 46 in dichtender Anlage mit Ausnahme eines in der Drosselhülse 60 ausgebildeten Drosselfensters 62. Dieses ist in einem an dem Betätigungskolben 46 angrenzenden Bereich der Drosselhülse 60 ausgebildet. Die Drosselhülse 60 weist eine im Wesentlichen zylindrische Form auf, wobei die Drosselhülse 60 einen Drosselhülsenabschnitt mit einem ersten Durchmesser und einen Drosselhülsenabschnitt mit einem zweiten Durchmesser umfasst, wobei der zweite Durchmesser größer ist als der erste Durchmesser. Der Drosselhülsenabschnitt des ersten Durchmessers bildet den in der Ausgangsstellung an den Betätigungskolben 46 angrenzenden Abschnitt der Drosselhülse 60, während sich der Drosselhülsenabschnitt des zweiten Durchmessers in Richtung der in Fig. 2 gezeigten rechten Seite erstreckt und durch den Drosselhülsenabschnitt des ersten Durchmessers von dem Betätigungskolben 46 axial beabstandet ist. Der Drosselhülsenabschnitt des ersten Durchmessers ist über eine Verbindungsfläche 64 mit dem Drosselhülsenabschnitt des zweiten Durchmessers verbunden und erstreckt sich im Wesentlichen senkrecht zu den beiden Drosselhülsenabschnitten.

Die Verbindungsfläche 64 der Drosselhülse 60 bildet gleichzeitig einen Anschlagkragen 64, der mit der Anschlagfläche 58 des Ventilelements 50 in Anlage bringbar ist und in der gezeigten Ausgangsstellung um einen Funktionsweg S von dieser beabstandet ist. Auf der Innenseite der Drosselhülse 60 dient der Anschlagkragen 64 als eine Abstützbasis für eine Rückstellfeder 66. Die Rückstellfeder 66 ist zumindest abschnittsweise in der Drosselhülse 60 aufgenommen und stützt sich mit einem Ende an der durch den Anschlagkragen 64 gebildeten inneren Abstützbasis der Drosselhülse 60 ab und wirkt mit dem von dem Anschlagkragen abgewandten Ende mit einem Haltering 68 zusammen. Somit wird über die Rückstellfeder 66 eine Vorspannung auf die Drosselhülse 60 in Richtung des Betätigungskolbens 46 bzw. in Kraftausgangsrichtung Fₒᵤₜ ausgeübt.

Der Haltering 68 wird in Bezug auf die Längsachse A wiederum durch eine weitere Rückstellfeder 70 vorgespannt. Die weitere Rückstellfeder 70 wirkt mit dem Haltering 68 auf einer von der Drosselhülse 60 abgewandten Seite zusammen, wobei sich die weitere Rückstellfeder 70 an einem von dem Haltering 68 abgewandten Ende an einer Abstützvorrichtung 72 des Krafteingangsglieds 12 abstützt.

Sowohl die Drosselhülse 60 als auch der Haltering 68 werden durch ein Halteelement 74 bezüglich der Längsachse A radial zentriert. Dazu weist das Halteelement 74 einen Flächenabschnitt auf, der in dichtender Anlage mit der Außenumfangsfläche der Drosselhülse 60, genauer gesagt der Außenumfangsfläche des Drosselhülsenabschnitts des zweiten Durchmessers liegt. Dabei ist die Drosselhülse 60 axial verlagerbar gegenüber dem Halteelement 74 und damit auch gegenüber dem Steuerventilgehäuse 44. Eine weitere an dem Halteelement 74 ausgebildete Anlagefläche steht wie bereits erwähnt zumindest abschnittsweise in Anlage mit dem Haltering 68, wodurch dieser in Bezug auf die Längsachse A radial zentriert wird. Ein Flächenabschnitt der Außenumfangsfläche des Halteelements 74 stützt sich gegenüber der Innenumfangsfläche des Steuerventilgehäuses 44 ab, sodass eine radiale Zentrierung des Halteelements 74 und damit wie beschrieben der Drosselhülse 60 und des Halterings 68 sichergestellt wird. Ferner steht das Halteelement 74 auch in Bezug auf die Längsachse A in axialer Richtung mit dem Haltering 68 in Anlage, wodurch das Halteelement 74 indirekt über den Haltering 68 von der weiteren Rückstellfeder 70 axial vorgespannt ist.

Des Weiteren umfasst das Halteelement 74 eine Ausnehmung, in der eine Ventilelementrückstellfeder 76 zumindest abschnittsweise aufgenommen ist. Diese Ventilelementrückstellfeder 76 stützt sich mit dem von dem Halteelement 74 abgewandten Ende an dem Ventilelement 50 ab und spannt dieses damit in Richtung der Ventilsitze 52, 54 vor. Das Ventilelement 50 steht zudem mit einem balgartigen Fortsatz mit zwei Flächen des Halteelements 74 sowie mit einem Abschnitt des Innenumfangs des Steuerventilgehäuses 44 in Anlage. In der gezeigten Ausführung ist ein Abschnitt des Ventilelements 50 zwischen einem Abschnitt des Halteelements 74 und einem Abschnitt der Innenumfangsfläche des Steuerventilgehäuses 44 aufgenommen und dadurch in Bezug auf die Längsachse A radial zentriert. Durch die weitere Anlage an dem Dichtwulst des Steuerventilgehäuses 44 und einem axialen Flächenabschnitt des Halteelements 74 ist das Ventilelement 50 in der gezeigten Ausgangsstellung sowohl axial als auch radial festgelegt.

Wie zuvor bereits beschrieben, ist der Anschlagkragen 64 der Drosselhülse 60 in der in Fig. 2 gezeigten Ausgangsstellung um einen Abstand S von der Anschlagfläche 58 des Ventilelements 50 beabstandet, der den Funktionsweg S der Drosselhülse bestimmt. Wird nun ausgehend von der Ausgangsstellung durch Betätigen des Bremspedals das Krafteingangsglied 12 in Kraftausgangsrichtung Fₒᵤₜ verlagert, verlagert sich damit auch der Betätigungskolben 46 in Kraftausgangsrichtung Fₒᵤₜ, wodurch sich der Ventilsitz 52 öffnet. Das Ventilelement 50, das Halteelement 74 sowie der Haltering 68, die axial miteinander in Anlage stehen und sich in der Ausgangsstellung direkt oder indirekt an dem Dichtwulst des Steuerventilgehäuses 44 abstützen, verlagern sich durch die Betätigung des Krafteingangsglieds 12 nicht. Die Drosselhülse 60 ist dagegen durch die Rückstellfeder 66 in Kraftausgangsrichtung Fₒᵤₜ vorgespannt und wird zunächst durch die Anlage der Stirnseite der Drosselhülse 60 an dem Betätigungskolben 46 axial in Kraftausgangsrichtung Fₒᵤₜ festgelegt. Bewegt sich nun, wie zuvor beschrieben, der Betätigungskolben 46 in Kraftausgangsrichtung Fₒᵤₜ, folgt die Drosselhülse 60 aufgrund der Vorspannung synchron der axialen Verlagerung des Betätigungskolbens 46. Das bedeutet, dass die Stirnseite der Drosselhülse 60 auch bei einer Verlagerung des Betätigungskolbens 46 in Kraftausgangsrichtung Fₒᵤₜ zunächst weiter mit diesem in Anlage steht. Somit wird beim Öffnen des ersten Ventilsitzes 52 zunächst eine fluidische Verbindung zwischen den Arbeitskammern 22, 24 mit der Umgebungsatmosphäre ausschließlich über das Drosselfenster 62 hergestellt. Da die Drosselhülse 60 über die Stirnseite bis auf das Drosselfenster 62 dichtend mit dem Betätigungskolben 46 in Anlage steht, strömt die Umgebungsluft nur über das Drosselfenster 62 in die Arbeitskammern 22, 24.

Die mögliche Verlagerung der Drosselhülse 60 ist jedoch durch den Anschlagkragen 64 und die Anschlagfläche 58 des Ventilelements auf den Funktionsweg S begrenzt. Die Verlagerung der Drosselhülse 60 kann der Verlagerung des Betätigungskolbens 46 demnach lediglich um den Funktionsweg S folgen. Überschreitet die Verlagerung des Betätigungskolbens 46 den Funktionsweg S, gelangt der Anschlagkragen 64 der Drosselhülse 60 mit der Anschlagfläche 58 des Ventilelements 50 in Berührung, wodurch eine weitere axiale Verlagerung der Drosselhülse 60 in Kraftausgangsrichtung Fₒᵤₜ blockiert wird. Der Betätigungskolben 46 wird dagegen bei einer Überschreitung des Funktionswegs S weiter in Kraftausgangsrichtung Fₒᵤₜ verlagert, was zu einem Abheben der Drosselhülse 60 von dem Betätigungskolben 46 führt. Dadurch öffnet sich ein Ringspalt zwischen der Drosselhülse 60 und dem Betätigungskolben 46, durch den ebenfalls Umgebungsluft in die Arbeitskammern 22, 24 strömt. In diesem Zustand kann die Umgebungsluft also im Wesentlichen ungedrosselt in die Arbeitskammern 22, 24 strömen.

Kommt es unter Zusammenwirkung mit den Rückstellfedern des Bremskraftverstärkers zu einem Druckausgleich an den beweglichen Wänden 26, 28, wird die in Fig. 2 gezeigte Ausgangsstellung, in der der erste Ventilsitz 52 und der zweite Ventilsitz 54 geschlossen sind und die Drosselhülse 60 mit dem Betätigungskolben 46 in Anlage steht, wiederhergestellt. Ebenso wird durch Reduzierung der Bremspedalkraft in bekannter Weise der zweite Ventilsitz 54 geöffnet, wobei der erste Ventilsitz 52 geschlossen ist, wodurch die Arbeitskammern 22, 24 mit der Unterdruckquelle verbunden werden, bis es zu einem Druckausgleich an den beweglichen Wänden 26, 28 kommt und die Ausgangsstellung wiederhergestellt wird.

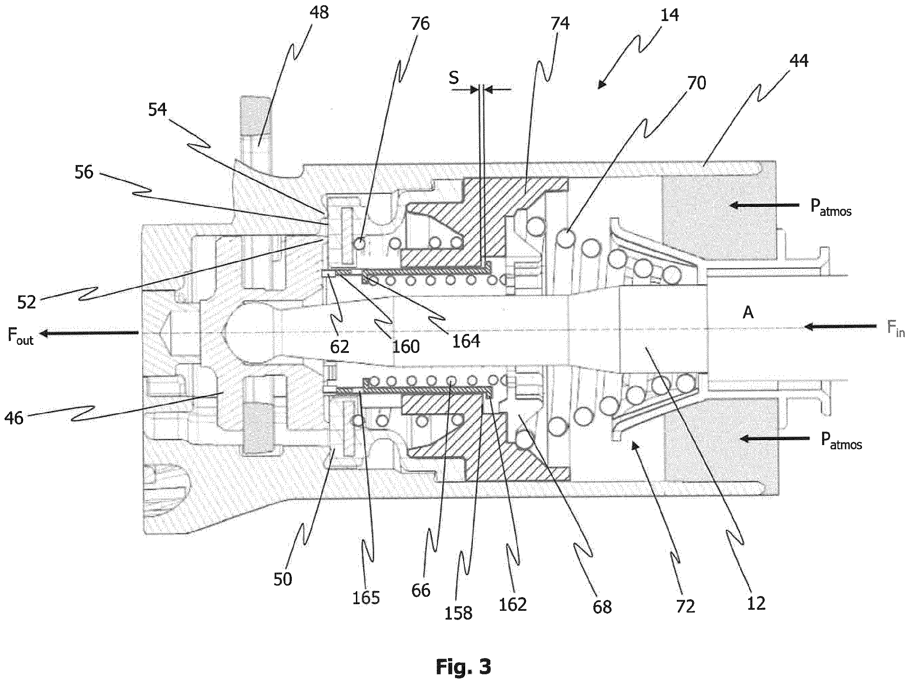

Figur 3 zeigt eine Ansicht entsprechend Figur 2 einer zweiten Ausführungsform der erfindungsgemäßen Steuerventilanordnung. Für gleichwirkende oder gleichartige Komponenten werden dieselben Bezugszeichen wie bei der vorangehenden Beschreibung verwendet. Zur Vermeidung von Wiederholungen wird lediglich auf die Unterschiede zwischen den Ausführungsformen eingegangen.

Bei dieser zweiten Ausführungsform ist die Drosselhülse 160 anders gestaltet, als die Drosselhülse 60 gemäß der ersten Ausführungsform. Die Drosselhülse 160 weist an ihrem in Figur 3 rechten Ende einen Kragen 162 auf, der in der Figur 3 gezeigten Ausgangsstellung in einem Abstand entsprechend dem Funktionsweg S zu einer Anschlagschulter 158 des Halteelements 74 angeordnet ist. Im Übrigen ist die Drosselhülse 160 im Wesentlichen kreiszylindrisch ausgebildet, wobei sie nahe ihrem in Figur 3 linken Ende eine Mehrzahl von radial einwärts gebogenen Laschen 164 aufweist. Diese Laschen 164 werden dadurch erhalten, dass etwa U-förmigen Einschnitte in den Körper der Drosselhülse 160 eingebracht werden, die dann radial einwärts gebogen werden. Dadurch ergeben sich auch radiale Öffnungen 165. Die radial einwärts vorstehenden Laschen 164 dienen als axiale Abstützung für die Rückstellfeder 66 und haben damit dieselbe Funktion wie der radial innere Bereich des Anschlagkragens 64.

Die Funktionsweise ist im Wesentlichen dieselbe, wie mit Bezug auf Figuren 1 und 2 erläutert. Der in der Ausgangsstellung vorhandene Funktionsweg S sowie die Rückstellfeder 66 wirken derart, dass zu Beginn einer Bremsbetätigung die Drosselhülse 160 über ihre in Figur 3 linke Stirnfläche in Anlage mit dem Betätigungskolben 46 bleibt und diesem in seiner Bewegung so lange folgt, bis der Kragen 162 in Anlage mit der Anlageschulter 158 gelangt. Während dieser gemeinsamen Bewegung von Betätigungskolben 46 und Drosselhülse 160 kann bei geöffnetem erstem Ventilsitz 52 ein Luftstrom von der Umgebungsatmosphäre nur durch die Drosselfenster 62 in die Arbeitskammer erfolgen. Dadurch werden die eingangs genannten Vorteile zu Beginn der Bremsung, insbesondere die Vermeidung von Instabilitäten und Vibrationen, wegen eines zu schnellen Luftstroms erreicht. Sobald das Ausmaß der Bremsbetätigung den Funktionsweg S überschreitet, hebt sich der Betätigungskolben 46 von der Stirnfläche der Drosselhülse 160 ab, und der Luftstrom kann sowohl durch die Drosselfenster 62 als auch an der Stirnfläche vorbei erfolgen.

Bei der Freigabe des Bremspedals laufen die vorstehend beschriebenen Funktionsphasen in umgekehrter Reihenfolge ab.

## Patentansprüche

1. Unterdruckbremskraftverstärker (10) für eine Kraftfahrzeugbremsanlage, umfassend:
- ein mit einem Bremspedal gekoppeltes oder koppelbares verlagerbares Krafteingangsglied (12),
- eine in einem Verstärkergehäuse (18) angeordnete Kammeranordnung (20) mit wenigstens einer Arbeitskammer (22, 24) und wenigstens einer Unterdruckkammer (30, 32), die über wenigstens eine bewegliche Wand (26, 28) voneinander getrennt sind,
- eine durch das Krafteingangsglied (12) betätigbare Steuerventilanordnung (14), und
- ein Kraftausgangsglied (16) zum Übertragen einer Betätigungskraft an ein nachgeordnetes Bremssystem,
wobei die wenigstens eine Arbeitskammer (22, 24) über die Steuerventilanordnung (14) wahlweise mit einer Unterdruckquelle oder der Atmosphäre fluidisch verbindbar ist, und wobei die Steuerventilanordnung (14) mit der wenigstens einen beweglichen Wand (26, 28) zur gemeinsamen Bewegung gekoppelt ist, wobei die Steuerventilanordnung (14) umfasst:
- ein Steuerventilgehäuse (44), in dem ein Betätigungskolben (46) verlagerbar angeordnet ist, der mit dem Krafteingangsglied (12) gekoppelt ist, und
- einen ersten Ventilsitz (52) sowie einen zweiten Ventilsitz (54),
wobei die Steuerventilanordnung (14) in eine Ausgangsstellung vorgespannt ist, in der zumindest der erste Ventilsitz (52) geschlossen ist,
**gekennzeichnet durch**
eine Drosselhülse (60, 160), die in der Ausgangsstellung unter Vorspannung zumindest abschnittsweise mit dem Betätigungskolben (46) in Anlage steht, wobei die Drosselhülse (60, 160) wenigstens ein Drosselfenster (62) aufweist, und wobei die Drosselhülse (60, 160) aus der Ausgangsstellung heraus bei einer Betätigung des Krafteingangsglieds (12) relativ zu dem Steuerventilgehäuse (44) um einen vorbestimmten Funktionsweg (S) verlagerbar ist, wobei während dieser Verlagerung die Drosselhülse (60, 160) mit dem Betätigungskolben (46) in Anlage steht, so dass eine fluidische Verbindung zwischen der wenigstens einen Arbeitskammer (22, 24) und der Umgebungsatmosphäre über das wenigstens eine Drosselfenster (62) besteht, und wobei bei Überschreiten des Funktionswegs (S) die Drosselhülse (60, 160) von dem Betätigungskolben (46) abhebt.

2. Unterdruckbremskraftverstärker (10) nach Anspruch 1,
**dadurch gekennzeichnet, dass** die Drosselhülse (60, 160) aus der Ausgangsstellung heraus bei der Betätigung des Krafteingangsglieds (12) relativ zu einem Ventilelement (50) um den vorbestimmten Funktionsweg (S) verlagerbar ist.

3. Unterdruckbremskraftverstärker (10) nach Anspruch 2,
**dadurch gekennzeichnet, dass** die Drosselhülse (60, 160) wenigstens einen Anschlagkragen (64, 162) aufweist, der mit einer Anschlagfläche (58, 158) des Ventilelements (50) oder einer anderen Komponente der Steuerventilanordnung (14) zumindest abschnittsweise in Anlage bringbar ist.

4. Unterdruckbremskraftverstärker (10) nach Anspruch 3,
**dadurch gekennzeichnet, dass** der Anschlagkragen (64, 162) der Drosselhülse (60, 160) in der Ausgangsstellung von der Anschlagfläche (58, 158) des Ventilelements (50) oder der anderen Komponente der Steuerventilanordnung (14) um den Funktionsweg (S) beabstandet ist, so dass der Funktionsweg (S) in Betätigungsrichtung durch ein Zusammenwirken des Anschlagkragens (64) mit der Anschlagfläche (58, 158) begrenzt ist.

5. Unterdruckbremskraftverstärker (10) nach Anspruch 3 oder 4,
**dadurch gekennzeichnet, dass** eine Stirnfläche (56) des Ventilelements (50) in der Ausgangsstellung eine dichtende Anlagefläche des ersten Ventilsitzes (52) und des zweiten Ventilsitzes (54) ausbildet, wobei die Stirnfläche (56) vorzugsweise entgegengesetzt zu der Anschlagfläche (58) des Ventilelements (50) ausgebildet ist.

6. Unterdruckbremskraftverstärker (10) nach einem der vorhergehenden Ansprüche,
**dadurch gekennzeichnet, dass** das wenigstens eine Drosselfenster (62) in einem an den Betätigungskolben (46) angrenzenden Bereich der Drosselhülse (60) angeordnet ist.

7. Unterdruckbremskraftverstärker (10) nach einem der vorhergehenden Ansprüche,
**dadurch gekennzeichnet, dass** die Drosselhülse (60, 160) eine im Wesentlichen zylindrische Form mit einem ersten Durchmesser und einem zweiten Durchmesser aufweist, wobei der zweite Durchmesser größer ist als der erste Durchmesser.

8. Unterdruckbremskraftverstärker (10) nach einem der vorhergehenden Ansprüche,
**dadurch gekennzeichnet, dass** die Steuerventilanordnung (14) einen Haltering (68) umfasst, der eine auf die Drosselhülse (60) wirkende Rückstellfeder (66) abstützt, wobei der Haltering (68) vorzugsweise durch eine weitere Rückstellfeder (70) vorgespannt ist.

9. Unterdruckbremskraftverstärker (10) nach einem der vorhergehenden Ansprüche,
**dadurch gekennzeichnet, dass** der erste Ventilsitz (52) in Form eines ringförmigen inneren Dichtsitzes an dem Betätigungskolben (46) ausgebildet ist und/oder der zweite Ventilsitz (54) in Form eines ringförmigen äußeren Dichtsitzes an dem Steuerventilgehäuse (44) ausgebildet ist.

10. Unterdruckbremskraftverstärker (10) nach einem der vorhergehenden Ansprüche,
**dadurch gekennzeichnet, dass** zwischen dem ersten Ventilsitz (52) und dem zweiten Ventilsitz (54) wenigstens ein Verbindungskanal zu der wenigstens einen Arbeitskammer (22, 24) ausgebildet ist.

11. Unterdruckbremskraftverstärker (10) nach einem der vorhergehenden Ansprüche,
**dadurch gekennzeichnet, dass** die Steuerventilanordnung (14) ein Halteelement (74) umfasst, das zumindest abschnittsweise mit dem Steuerventilgehäuse (44) in Anlage steht, und die Drosselhülse (60, 160) in Bezug auf eine Längsachse (A) zentriert.

12. Unterdruckbremskraftverstärker (10) nach Anspruch 11,
**dadurch gekennzeichnet, dass** das Halteelement (74) einen Abschnitt des Ventilelements (50) fixiert und/oder eine Ventilelementrückstellfeder (76) abstützt, die das Ventilelement (50) in Richtung der beiden Ventilsitze (52, 54) vorspannt und/oder die Anschlagfläche (158) aufweist.

13. Unterdruckbremskraftverstärker (10) nach einem der vorhergehenden Ansprüche,
**dadurch gekennzeichnet, dass** der Unterdruckbremskraftverstärker (10) eine erste und eine zweite Arbeitskammer (22, 24), eine erste und eine zweite Unterdruckkammer (30, 32) und eine erste und zweite bewegliche Wand (26, 28) umfasst, wobei die erste und die zweite Arbeitskammer (22, 24) über wenigstens einen Verbindungskanal (40, 42) miteinander verbunden sind.

14. Unterdruckbremskraftverstärker (10) nach einem der vorhergehenden Ansprüche,
**dadurch gekennzeichnet, dass** in der Ausgangsstellung der Steuerventilanordnung (14) sowohl der erste Ventilsitz (52) als auch der zweite Ventilsitz (54) jeweils geschlossen sind.

## Claims

1. Vacuum brake booster (10) for a motor vehicle brake system, comprising:
- a displaceable force input member (12) which is coupled or is capable of being coupled with a brake pedal,
- a chamber arrangement (20) being arranged in a booster housing (18), having at least one working chamber (22, 24) and at least one vacuum chamber (30, 32), which are separated from one another via at least one movable wall (26, 28),
- a control valve assembly (14) being actuatable by the force input member (12), and
- a force output member (16) for transferring an actuating force to a downstream brake system,
wherein the at least one working chamber (22, 24) is optionally fluidically connectable to a vacuum power source or the atmosphere via the control valve assembly (14), and wherein the control valve assembly (14) is coupled to the at least one movable wall (26, 28) for joint movement, wherein the control valve assembly (14) comprises:
- a control valve housing (44) in which an actuating piston (46) is arranged displaceably, the actuating piston being coupled to the force input member (12), and
- a first valve seat (52) and a second valve seat (54),
wherein the control valve assembly (14) is biased into a normal position in which at least the first valve seat (52) is closed,
**characterized by**
a flow restricting sleeve (60, 160) which in the normal position under preload is at least sectionally in contact with the actuating piston (46), wherein the flow restricting sleeve (60, 160) is provided with at least one flow restricting window (62), and wherein the flow restricting sleeve (60, 160) is displaceable by a predetermined functional path (S) from the normal position relative to the control valve housing (44) upon an actuation of the force input member (12), wherein the flow restricting sleeve (60, 160) is in contact with the actuating piston (46) during this displacement, so that a fluidical connection between the at least one working chamber (22, 24) and the surrounding atmosphere exists via the at least one flow restricting window (62), and wherein the flow restricting sleeve (60, 160) lifts from the actuating piston (46) when exceeding the functional path (S).

2. Vacuum brake booster (10) according to claim 1,
**characterized in that** the flow restricting sleeve (60, 160) is displaceable by the predetermined functional path (S) from the normal position relative to a valve element (50) upon an actuation of the force input member (12).

3. Vacuum brake booster (10) according to claim 2,
**characterized in that** the flow restricting sleeve (60, 160) has at least one stop flange (64, 162) which can be brought at least sectionally into contact with a stop face (58, 158) of the valve element (50) or another component of the control valve assembly (14).

4. Vacuum brake booster (10) according to claim 3,
**characterized in that** the stop flange (64, 162) of the flow restricting sleeve (60, 160) is spaced apart from the stop face (58, 158) of the valve element (50) or of the other component of the control valve assembly (14) by the functional path (S) in the normal position, so that the functional path (S) is limited in the actuating direction by cooperation of the stop flange (64) with the stop face (58, 158).

5. Vacuum brake booster (10) according claim 3 or 4,
**characterized in that** an end face (56) of the valve element (50) forms a sealing contact face of the first valve seat (52) and of the second valve seat (54) in the normal position, wherein the end face (56) is preferably provided opposed to the stop face (58) of the valve element (50).

6. Vacuum brake booster (10) according to any one of the preceding claims,
**characterized in that** the at least one flow restricting window (62) is arranged in a region of the flow restricting sleeve (60) adjacent to the actuating piston (46).

7. Vacuum brake booster (10) according to any one of the preceding claims,
**characterized in that** the flow restricting sleeve (60, 160) has a substantially cylindrical shape with a first diameter and a second diameter, wherein the second diameter is larger than the first diameter.

8. Vacuum brake booster (10) according to any one of the preceding claims,
**characterized in that** the control valve assembly (14) comprises a holding ring (68) which supports a return spring (66) acting on the flow restricting sleeve (60), wherein the holding ring (68) is preferably preloaded by a further return spring (70).

9. Vacuum brake booster (10) according to any one of the preceding claims,
**characterized in that** the first valve seat (52) is in the form of an annular inner seal seat on the actuating piston (46) and/or the second valve seat (54) is in the form of an annular outer seal seat on the control valve housing (44).

10. Vacuum brake booster (10) according to any one of the preceding claims,
**characterized in that** at least one connecting channel to the at least one working chamber (22, 24) is provided between the first valve seat (52) and the second valve seat (54).

11. Vacuum brake booster (10) according to any one of the preceding claims,
**characterized in that** the control valve assembly (14) comprises a holding element (74) which is at least sectionally in contact with the control valve housing (44) and centers the flow restricting sleeve (60, 160) relative to a longitudinal axis (A).

12. Vacuum brake booster (10) according to claim 11,
**characterized in that** the holding element (74) fixes a portion of the valve element (50) and/or supports a valve element return spring (76) which preloads the valve element (50) in the direction of the two valve seats (52, 54) and/or has the stop face (158).

13. Vacuum brake booster (10) according to any one of the preceding claims,
**characterized in that** the vacuum brake booster (10) comprises a first and a second working chamber (22, 24), a first and a second vacuum chamber (30, 32) and a first and a second movable wall (26, 28), wherein the first and the second working chambers (22, 24) are connected to one another via at least one connecting channel (40, 42).

14. Vacuum brake booster (10) according to any one of the preceding claims,
**characterized in that**, in the normal position of the control valve assembly (14), both the first valve seat (52) and the second valve seat (54) are closed.

## Revendications

1. Servofrein à dépression (10) pour un système de freinage de véhicule automobile, comprenant :
- un élément d'entrée de force (12) déplaçable couplé ou susceptible d'être couplé à une pédale de frein,
- un ensemble (20) de chambres disposé dans un boîtier (18) d'amplificateur, comprenant au moins une chambre de travail (22, 24) et au moins une chambre à dépression (30, 32) qui sont séparées l'une de l'autre par au moins une paroi mobile (26, 28),
- un ensemble (14) soupape de commande susceptible d'être actionné par l'élément d'entrée de force (12), et
- un élément de sortie de force (16) pour transmettre une force d'actionnement à un système de freinage situé en aval,
dans lequel ladite au moins une chambre de travail (22, 24) peut être reliée fluidiquement au choix, par l'intermédiaire de l'ensemble (14) soupape de commande, à une source de dépression ou à l'atmosphère, et dans lequel l'ensemble (14) soupape de commande est couplé à ladite au moins une paroi mobile (26, 28) pour un mouvement commun, l'ensemble (14) soupape de commande comprenant :
- un boîtier (44) de soupape de commande dans lequel un piston d'actionnement (46) couplé à l'élément d'entrée de force (12) est disposé de manière déplaçable, et
- un premier siège de soupape (52) ainsi qu'un second siège de soupape (54),
dans lequel l'ensemble (14) soupape de commande est précontraint dans une position initiale dans laquelle au moins le premier siège de soupape (52) est fermé,
**caractérisé par**
un manchon d'étranglement (60, 160) qui, dans la position initiale sous précontrainte, est en contact au moins sur certaines parties avec le piston d'actionnement (46), le manchon d'étranglement (60, 160) comprenant au moins une fenêtre d'étranglement (62) et le manchon d'étranglement (60, 160) étant susceptible d'être déplacé à partir de la position initiale d'une course fonctionnelle prédéterminée (S) par rapport au boîtier (44) de soupape de commande lorsque l'élément d'entrée de force (12) est actionné, le manchon d'étranglement (60, 160) étant en contact avec le piston d'actionnement (46) pendant ce déplacement, de sorte qu'il existe une liaison fluidique entre ladite au moins une chambre de travail (22, 24) et l'atmosphère ambiante par l'intermédiaire de ladite au moins une fenêtre d'étranglement (62), et le manchon d'étranglement (60, 160) se soulevant du piston d'actionnement (46) lorsque la course fonctionnelle (S) est dépassée.

2. Servofrein à dépression (10) selon la revendication 1,
**caractérisé en ce que** le manchon d'étranglement (60, 160) peut être déplacé à partir de la position initiale de la course fonctionnelle prédéterminée (S) par rapport à un élément de soupape (50) lorsque l'élément d'entrée de force (12) est actionné.

3. Servofrein à dépression (10) selon la revendication 2,
**caractérisé en ce que** le manchon d'étranglement (60, 160) comprend au moins une collerette de butée (64, 162) qui est susceptible d'être mise en contact au moins sur certaines parties avec une surface de butée (58, 158) de l'élément de soupape (50) ou un autre composant de l'ensemble (14) soupape de commande.

4. Servofrein à dépression (10) selon la revendication 3,
**caractérisé en ce que**, dans la position initiale, la collerette de butée (64, 162) du manchon d'étranglement (60, 160) est espacée de la course fonctionnelle (S) de la surface de butée (58, 158) de l'élément de soupape (50) ou de l'autre composant de l'ensemble (14) soupape de commande, de sorte que la course fonctionnelle (S) est limitée dans la direction d'actionnement par une coopération de la collerette de butée (64) avec la surface de butée (58, 158).

5. Servofrein à dépression (10) selon la revendication 3 ou 4,
**caractérisé en ce que**, dans la position initiale, une face frontale (56) de l'élément de soupape (50) forme une face de contact étanche du premier siège de soupape (52) et du second siège de soupape (54), la face frontale (56) étant de préférence opposée à la face de butée (58) de l'élément de soupape (50).

6. Servofrein à dépression (10) selon l'une des revendications précédentes,
**caractérisé en ce que** ladite au moins une fenêtre d'étranglement (62) est disposée dans une zone du manchon d'étranglement (60) adjacente au piston d'actionnement (46).

7. Servofrein à dépression (10) selon l'une des revendications précédentes,
**caractérisé en ce que** le manchon d'étranglement (60, 160) a une forme sensiblement cylindrique avec un premier diamètre et un second diamètre, le second diamètre étant plus grand que le premier diamètre.

8. Servofrein à dépression (10) selon l'une des revendications précédentes,
**caractérisé en ce que** l'ensemble (14) soupape de commande comprend une bague de retenue (68) qui supporte un ressort de rappel (66) agissant sur le manchon d'étranglement (60), la bague de retenue (68) étant de préférence précontrainte par un autre ressort de rappel (70).

9. Servofrein à dépression (10) selon l'une des revendications précédentes,
**caractérisé en ce que** le premier siège de soupape (52) est réalisé sous la forme d'un siège d'étanchéité intérieur annulaire sur le piston d'actionnement (46) et/ou le second siège de soupape (54) est réalisé sous la forme d'un siège d'étanchéité extérieur annulaire sur le boîtier (44) de soupape de commande.

10. Servofrein à dépression (10) selon l'une des revendications précédentes,
**caractérisé en ce qu'**au moins un canal de liaison avec ladite au moins une chambre de travail (22, 24) est formé entre le premier siège de soupape (52) et le second siège de soupape (54).

11. Servofrein à dépression (10) selon l'une des revendications précédentes,
**caractérisé en ce que** l'ensemble (14) soupape de commande comprend un élément de retenue (74) qui est en contact au moins sur certaines parties avec le boîtier (44) de soupape de commande et qui centre le manchon d'étranglement (60, 160) par rapport à un axe longitudinal (A).

12. Servofrein à dépression (10) selon la revendication 11,
**caractérisé en ce que** l'élément de retenue (74) fixe une partie de l'élément de soupape (50) et/ou supporte un ressort de rappel d'élément de soupape (76) qui précontraint l'élément de soupape (50) dans la direction des deux sièges (52, 54) et/ou présente la surface de butée (158).

13. Servofrein à dépression (10) selon l'une des revendications précédentes,
**caractérisé en ce que** le servofrein à dépression (10) comprend une première et une seconde chambre de travail (22, 24), une première et une seconde chambre à dépression (30, 32) et une première et une seconde paroi mobile (26, 28), la première et la seconde chambre de travail (22, 24) étant reliées entre elles par au moins un canal de liaison (40, 42).

14. Servofrein à dépression (10) selon l'une des revendications précédentes,
**caractérisé en ce que** le premier siège de soupape (52) et le second siège de soupape (54) sont tous deux fermés dans la position initiale de l'ensemble (14) soupape de commande.
